# EUROPEAN PATENT SPECIFICATION

(11) **EP 3 021 576 B1**
(45) Date of publication and mention of the grant of the patent: **10.01.2018**
(21) Application number: 15194251.3
(22) Date of filing: 12.11.2015
(51) Int. Cl.: H04N 7/18, G06K 9/00, G08G 1/16

(54) **WIRELESS RECEPTION DEVICE, VEHICLE REAR SENSOR INCLUDING THE SAME AND METHOD FOR SENSING REAR IMAGE**
DRAHTLOSEMPFANGSVORRICHTUNG, FAHRZEUGHECKSENSOR DAMIT UND VERFAHREN ZUR MESSUNG DER VON HECKBILDERN
DISPOSITIF DE RÉCEPTION SANS FIL, CAPTEUR ARRIÈRE DE VÉHICULE COMPRENANT CELUI-CI ET PROCÉDÉ DE DÉTECTION D'IMAGE ARRIÈRE

(30) Priority: 17.11.2014 KR 20140159899
(43) Date of publication of application: 18.05.2016
(73) Proprietor: LG Innotek Co., Ltd., Seoul, 04637 (KR)
(72) Inventor: Kim, Jung Hun, Jung-gu 04637 SEOUL (KR); Jeong, Seung Man, Jung-gu 04637 SEOUL (KR)
(74) Representative: DREISS Patentanwälte PartG mbB

(56) References cited:
- CN-U- 201 914 177
- US-A1- 2009 244 282

## Description

### CROSS REFERENCE TO RELATED APPLICATION

This application claims priority Korean Patent Application No 10-2014-0159899, filed in Korea on November 17, 2014.

### TECHNICAL FIELD

Embodiments relate to a vehicle rear sensor and, more particularly, to a device provided at the rear side of a vehicle to capture the rear image of the vehicle, to wirelessly transmit the captured image and to display the captured image on a navigation device located in front of a driver seat.

### BACKGROUND

US 2009 0244282 A1 discloses an exemplary vehicle camera system according to the preamble of the claims 1 and 10. In a vehicle traveling at a high speed, it is important to ensure a driving space such that a driver accurately views the front, left, right and rear sides of the vehicle and views a very close position upon parking and stopping.

That is, the driver should view the distant rear side of the vehicle when the vehicle travels at a high speed and view the position close to the vehicle when parking or stopping the vehicle at a predetermined position.

The vehicle includes a rear-view mirror mounted inside the vehicle to enable the driver to view the rear side of the vehicle, side-view mirrors mounted outside the vehicle to enable the driver to view the right and left rear sides of the vehicle during driving, and a rear sensor (a proximity sensor, an ultrasonic sensor, etc.) or a rear camera mounted on the rear bumper of the vehicle to sense or capture an invisible object located at a close position upon parking or stopping.

That is, the side-view mirrors are used to view the distant rear side of the vehicle and to view a passenger seated on the back seat, and the rear sensor or rear camera mounted on the rear bumper is used to sense children or objects which are located at the low rear side of the vehicle and are not viewed via the rear-view mirror and the side-view mirrors to send a warning to the driver.

However, a conventional vehicle rear camera has the following problems.

The vehicle rear camera operates when the vehicle is in a reverse mode and receives power from the battery or taillights of the vehicle and is connected to a navigation device by wire to display the rear image of the vehicle on the navigation device upon reversing the vehicle.

Accordingly, when the rear camera and the navigation device are connected by wire in the vehicle, a separate wire is mounted in the vehicle.

Even when the vehicle moves forward or stops, the driver needs to recognize a person or object approaching the rear side of the vehicle. However, since the conventional rear camera operates only when the vehicle in a drive mode, it is difficult to recognize the person or object approaching the rear side of the vehicle during driving.

### SUMMARY

Embodiments provide a vehicle rear sensor including a vehicle rear camera, which is not connected to a navigation device by wire, and enable a driver to recognize an object approaching the rear side of a vehicle even when the vehicle is in a drive mode.

In one embodiment, a vehicle rear sensor includes an imaging device including an image acquisition unit, an encoder configured to encode image information captured by the image acquisition unit and a first transmitter configured to transmit the encoded signal, and a wireless reception device including a receiver configured to wirelessly receive a signal, a controller configured to determine whether the received signal is an event signal and a second transmitter configured to send the event signal and the received signal to a display device. The event signal has at least one byte for identifying a mode.

The imaging device may be provided at a rear side of a vehicle.

The image acquisition unit may be a vehicle rear camera.

The controller may compare image information of consecutive frames and display the event signal when change in image information per unit time deviates from a predetermined range.

When power is applied to taillights of a vehicle, the image information of the imaging device may be continuously sent to the display device.

The wireless reception device may be a universal serial bus (USB) dongle.

The second transmitter may be a universal serial bus (USB).

The wireless reception device may be connected to the display device via an audio/video (A/V) cable.

The A/V cable may continuously send the image information to the display device when power is applied to taillights of a vehicle.

The second transmitter may send power from the display device to the wireless reception device.

In another embodiment, a method of sensing a rear side of a vehicle includes continuously acquiring and wirelessly transmitting image information of a rear side of a vehicle, wirelessly receiving the image information and determining whether the vehicle is in a drive mode or a stop mode, comparing image information of consecutive frames and determining whether an event occurs, when the vehicle is in the drive mode or the stop mode, and sending the image information to a display device along with an event occurrence signal when the event occurs.

The method may further include storing the sent image information in the display device and outputting the event occurrence signal on the display device as image information and/or sound information.

When the vehicle is in a reverse mode, the image information of the consecutive frames may be continuously displayed on the display device.

Whether the vehicle is in the drive mode or the stop mode may be determined in a vehicle rear camera or a wireless reception device.

When pixel change deviates from a predetermined range, it may be determined that an event occurs.

In the vehicle rear sensor and method for sensing the rear image according to the embodiment, the image signal captured by the rear camera may be wirelessly sent to the USB dongle and the USB dongle may be connected to the navigation device such that the navigation device displays the rear image of the vehicle.

In particular, even in the drive mode or the stop mode, a person or object approaching the rear side of the vehicle is determined as an event such that the driver recognizes the event. The image corresponding to the event may be stored in the navigation device. Without using an expensive 2-channel black box, the rear camera may send an image corresponding to an event and the navigation device may store the image.

### BRIEF DESCRIPTION OF THE DRAWINGS

Arrangements and embodiments may be described in detail with reference to the following drawings in which like reference numerals refer to like elements and wherein:
FIG. 1 is a diagram showing placement of a vehicle rear sensor according to one embodiment;
FIG. 2 is a diagram showing the configuration of an imaging device of FIG. 1;
FIG. 3 is a diagram showing the configuration of a wireless reception device of FIG. 1;
FIG. 4 is a diagram showing a method of determining an event signal in a controller according to one embodiment;
FIG. 5 is a diagram showing encrypted image information;
FIG. 6 is a diagram showing operation of the vehicle rear sensor of FIG. 1 according to one embodiment;
FIG. 7 is a diagram showing operation of the vehicle rear sensor of FIG. 1 according to another embodiment; and
FIGs. 8a and 8b are diagrams showing connection between a wireless reception device and a navigation device according to one embodiment.

### DESCRIPTION OF SPECIFIC EMBODIMENTS

Hereinafter, the embodiments will be described with reference to the accompanying drawings, in order to help full understanding of this disclosure. However, the embodiments may be variously modified and the scope of this disclosure is not limited to the below-described embodiments. The embodiments are described to provide full understanding of this disclosure to those skilled in the art.

The relational terms such as first, second, upper, lower and the like may be used solely to distinguish one entity or element from another entity or element without necessarily requiring or implying any physical or logical relationship or order between such entities or elements.

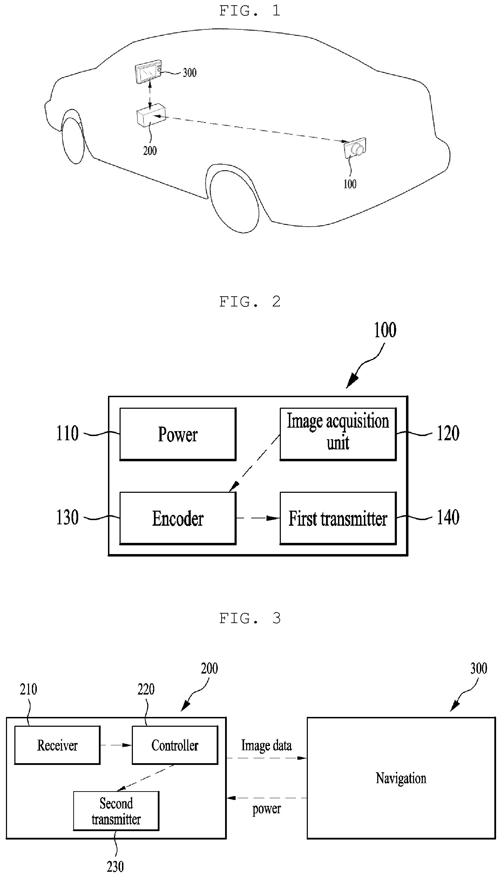

FIG. 1 is a diagram showing placement of a vehicle rear sensor according to one embodiment.

The vehicle rear sensor according to the embodiment includes an imaging device 100 located on the rear side of a vehicle and a wireless reception device 200 for wirelessly receiving image information from the imaging device 100. A navigation device 300 for receiving and displaying the image information from the wireless reception device 100 may be connected to the wireless reception device 200.

FIG. 2 is a diagram showing the configuration of an imaging device of FIG. 1.

The imaging device 100 may be a vehicle rear camera and may include a power supply 110, an image acquisition unit 120, an encoder 130 and a first transmitter 140.

The power supply 110 receives power from an external device of the imaging device 100. For example, the power supply 110 may be connected to the battery of the vehicle and may be connected to the electrical wire located at the back side of the vehicle. The conventional rear camera receives power from the taillights of the vehicle. In the embodiment, since the power supply 110 does not receive current from the taillights of the vehicle, the power supply may continuously receive current even when the vehicle is in a drive mode or a stop mode.

The image acquisition unit 120 may be a camera and may include a lens provided toward the rear side of the vehicle to capture the rear image of the vehicle. When the engine of the vehicle starts and the power supply 110 supplies current, the image acquisition unit 120 may continuously capture the rear image of the vehicle regardless of what gear the vehicle is in.

At this time, the image acquisition unit 120 may capture a full high definition (HD) image having 1920*1080 pixels. In consideration of data transmission efficiency of the wireless transmission/reception method, the encoder 130 may crop some of the captured image and transmit a VGA image having 800*600 pixels.

The encoder 130 may encode the image information captured by the image acquisition unit 120 such that the image information may be wirelessly transmitted.

The first transmitter 140 transmits the encoded image information to the wireless reception device 200. The wireless communication method may be radio communication, optical wireless communication using infrared rays, visible rays, etc. (laser, LED, etc.), acoustic communication using sound waves or ultrasonic waves, etc.

More specifically, the wireless communication method may be ZigBee, Bluetooth, Wi-Fi, etc. in addition to RFID or NFC. For example, a signal may be transmitted and received at a band of 2.4 GHz.

FIG. 3 is a diagram showing the configuration of a wireless reception device of FIG. 1.

The wireless reception device 200 may include a receiver 210 for receiving the transmitted signal, a controller 220 for determining whether the received signal is an event signal, and a second transmitter 230 for sending the event signal and the received signal to a display device of the navigation device 300. For example, the wireless reception device 200 may be a universal serial bus (USB) dongle. When the USB dongle is inserted into the navigation device, an image signal may be sent to the navigation device without a wire connected to the main processor of the navigation device.

The wireless reception device 200 receives the signal wirelessly transmitted from the imaging device 100 and the controller 220 controls operation of the wireless reception device 200 and determines whether the received signal is an event signal.

At this time, whether the received signal is an event signal is determined by comparing images of the consecutive frames and determining whether pixel change deviates from a predetermined range.

The pixel change may be change in color or brightness of each pixel in consecutive frames.

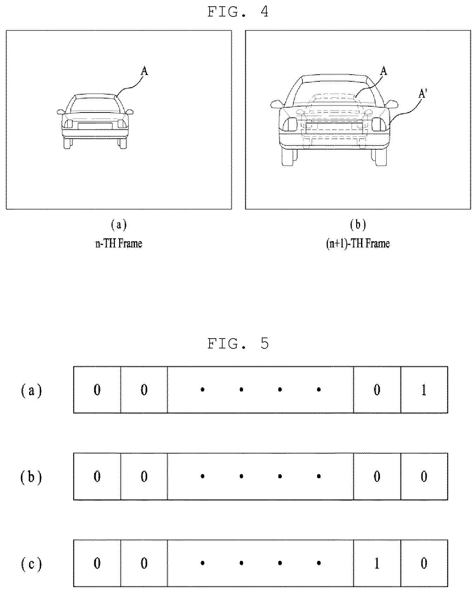

FIG. 4 is a diagram showing a method of determining an event signal in the controller 220 according to one embodiment.
(a) and (b) show an n-th frame and an (n+1)-th frame of the images captured by and received from the imaging device, (a) shows the rear side of the vehicle A and (b) shows the rear side of the vehicle A' greater in size than the size of the vehicle A of (a).

That is, the vehicle A' of the (n+1)-th frame approaches closer than the vehicle A of the n-th frame. In the image of the (n+1)-th frame of (b), when the vehicle A' and the vehicle A of the n-th frame denoted by a dotted line are compared, pixel change may be confirmed. When the number of changed pixels is greater than a predetermined range, it may be determined that an event occurs, that is, that another vehicle approaches the back side of the vehicle.

The second transmitter 230 may send the received signal to the display device of the navigation device 300 provided in front of the driver seat of the vehicle. The second transmitter 230 may be a USB. At this time, the received signal (image data) may be sent to the navigation device 300 via the USB and the wireless reception device 200 may receive power from the navigation device 300 via the USB.

The navigation device 300 includes a decoder (not shown) for decoding the received signal into an image signal to be displayed. At this time, the navigation device 300 may continuously display the signal received in the reverse mode of the vehicle, and selectively display the signal received in the drive or stop mode (a neutral gear or a park gear) of the vehicle only when an event occurs.

This will now be described in detail. The controller 220 of the wireless reception device 200 determines whether the received signal is an event signal and sends at least one byte for identifying the mode along with the image signal of the frame when the received signal is the event signal.

That is, when the signal of each frame is transmitted, the byte for identifying the mode of each signal is also sent. In the decoder of the navigation device 300, the signal for identifying the mode is distinguished and, when it is determined that the received signal is the event signal, the signal is stored in the memory (not shown) of the navigation device 300 and occurrence of the event is displayed. At this time, occurrence of the event may be displayed by displaying an icon on the display of the navigation device or ringing an alarm bell.

FIG. 5 is a diagram showing encrypted image information.

For example, (a) shows data indicating occurrence of an event, (b) shows data indicating that an event does not occur during driving, and (c) shows data captured in the reverse mode. All received data may be displayed on the navigation device 300.

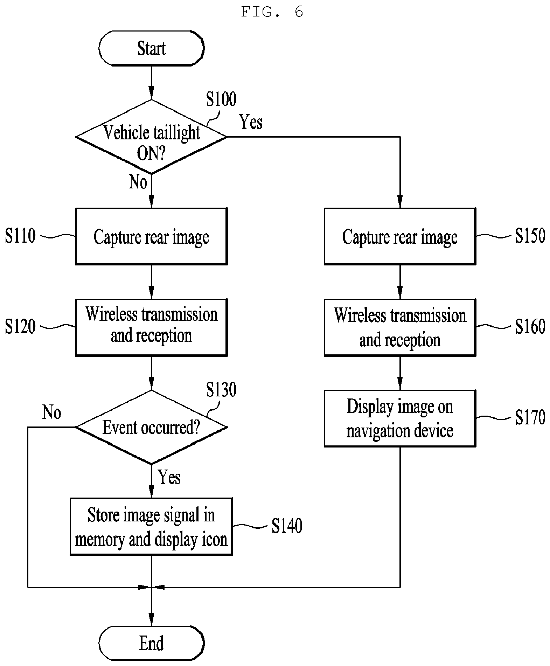

FIG. 6 is a diagram showing operation of the vehicle rear sensor of FIG. 1 according to one embodiment.

Whether the taillights of the vehicle are turned on is determined (S100). The USB dongle cannot determine whether the vehicle is in a reverse mode. When the taillights are turned on, the vehicle is in the reverse mode. Therefore, the imaging device 100 may determine that the vehicle is in the reverse mode and capture the rear image of the vehicle (S150). The rear image may be captured by the image acquisition unit 110 of the imaging device 100 and the captured image may be encoded by the encoder 120.

The captured image is transmitted by the imaging device 100 and is received by the wireless reception device 200 (S160). The first transmitter 140 of the imaging device 100 may transmit the encoded image signal and the receiver 210 of the wireless reception device 200 may receive the signal. At this time, the controller 220 may send the image signal to the navigation device 300 via the second transmitter 230 without determining whether an event occurs.

As shown in FIG. 5(c), when the data captured in the reverse mode is displayed, the controller 220 may send all the received data to the navigation device without determining whether an event occurs and the navigation device 300 may display the image signal received via the USB, that is, the rear image of the vehicle captured in the reverse mode (S170).

When it is determined that the taillights of the vehicle are turned off (S100), the vehicle is in the drive or stop mode. Even in this case, the imaging device may capture the rear image of the vehicle (S110). The rear image may be captured by the image acquisition unit 110 of the imaging device 100 and the captured image may be encoded by the encoder 120.

The captured image is transmitted by the imaging device 100 and is received by the wireless reception device 200 (S120). The first transmitter 140 of the imaging device 100 may transmit the encoded image signal and the receiver 210 of the wireless reception device 200 may receive the signal.

The image signal captured and transmitted when the taillights of the vehicle are turned off, that is, when the vehicle is in the drive mode or the stop mode, may not be displayed on the navigation device 300. At this time, the navigation device 300 may display travel information to a destination or a map.

The controller 220 may determine whether an event occurs (S130). Whether an event occurs may be determined using pixel change of the image signal in consecutive frames as described with reference to FIG. 4.

When no event occurs (No), the wireless reception device 200 does not store or send the received image signal. At this time, the navigation device 300 may continuously display travel information to a destination or a map.

When an event occurs (Yes), the image signal may be sent to the navigation device 300 via the second transmitter 230. The navigation device 300 checks the event signal and displays occurrence of the event by displaying an icon on the display or ringing an alarm bell (S140). The received image signal may be stored in the memory.

The driver may confirm the stored image signal by clicking the icon.

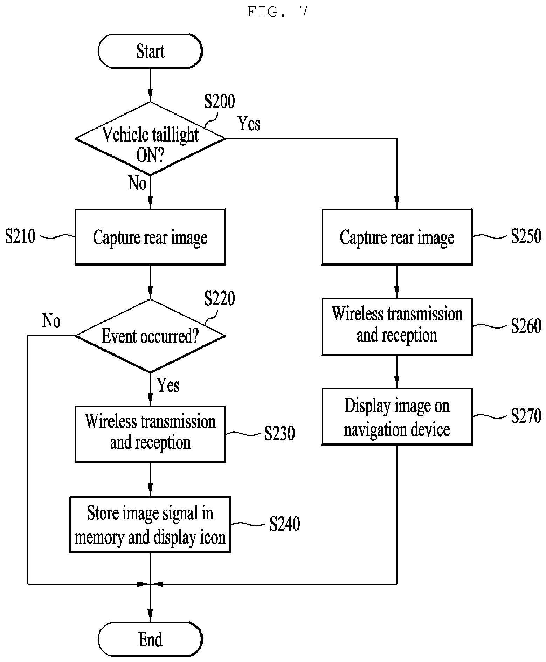

FIG. 7 is a diagram showing operation of the vehicle rear sensor of FIG. 1 according to another embodiment.

Operation of the vehicle rear sensor according to the present embodiment is similar to the embodiment of FIG. 6 except that the imaging device determines whether an event occurs.

Whether the taillights of the vehicle are turned on is determined (S200). When the taillights are turned on, since the vehicle is in the reverse mode, the rear image of the vehicle is captured (S250). The rear image may be captured by the image acquisition unit 110 of the imaging device 100 and the captured image may be encoded by the encoder 120.

The captured image is transmitted by the imaging device 100 and is received by the wireless reception device 200 (S260). The first transmitter 140 of the imaging device 100 may transmit the encoded image signal and the receiver 210 of the wireless reception device 200 may receive the signal. At this time, the controller 220 may send the image signal to the navigation device 300 via the second transmitter 230 without determining whether an event occurs.

As shown in FIG. 5(c), when the data captured in the reverse mode is displayed, the controller 220 may send the received data to the navigation device without determining whether an event occurs and the navigation device 300 may display the image signal received via the USB, that is, the rear image of the vehicle captured in the reverse mode (S270) .

When it is determined that the taillights of the vehicle are turned off (S200), the vehicle is in the drive or stop mode. Even in this case, the imaging device may capture the rear image of the vehicle (S210). The rear image may be captured by the image acquisition unit 110 of the imaging device 100 and the captured image may be encoded by the encoder 120.

The imaging device 100 may determine whether an event occurs (S220). Whether an event occurs may be determined using pixel change of the image signal in consecutive frames as described above. The imaging device 100 should include a controller (not shown).

In the present embodiment, since the imaging device 100 determines whether an event occurs, the image information may be sent only when the event occurs. Accordingly, when the event occurs, full HD image information may be transmitted instead of VGA image information.

When no event occurs (No), the captured image signal may not be stored. The wireless reception device 200 may not receive the image signal. At this time, the navigation device 300 may display travel information to a destination or a map.

When an event occurs (Yes), the image signal may be encoded and transmitted by the imaging device 100 and may be received by the wireless reception device 200 (S230). The first transmitter 140 of the imaging device 100 may transmit the encoded image signal and the receiver 210 of the wireless reception device 200 may receive the signal.

The image signal may be sent to the navigation device 300 via the second transmitter 230 of the wireless reception device 200. The navigation device 300 displays occurrence of the event by displaying an icon on the display or ringing an alarm bell (S240). The received image signal may be stored in the memory.

The driver may confirm the stored image signal by clicking the icon.

In the present embodiment, since the event is confirmed in the imaging device by comparing pixels in the image signals of the consecutive frames, the configuration of the imaging device may become complicated, but only the image signal corresponding to the event is transmitted. Therefore, it is possible to reduce data transmission/reception load between the imaging device and the wireless reception device.

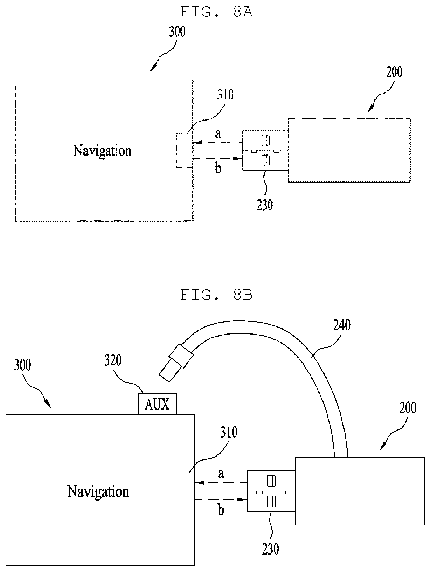

FIGs. 8a and 8b are diagrams showing connection between a wireless reception device and a navigation device according to one embodiment.

The wireless reception device 200 shown in FIG. 8a includes a second transmitter 230. The second transmitter 230 may be a USB. A receiver 310 mounted at one side of the navigation device 300 may be a USB reception port, and a second transmitter 230 of a USB type may be connected to the receiver 310 of a USB reception port type. At this time, the image signal may be sent in a direction "a" and power may be supplied in a direction "b".

The wireless reception device 200 shown in FIG. 8b may include an audio/video (A/V) cable 240 in addition to the second transmitter 230. The second transmitter may be a USB. A receiver 310 mounted at one side of the navigation device 300 may be a USB reception port and an A/V receiver 320 may be further included.

The second transmitter 230 of a USB type may be connected to the receiver 310 of the USB reception port type and the A/V cable 240 may be connected to the A/V receiver 320. At this time, the image signal in the drive mode or the stop mode may be sent in a direction "a" and power may be supplied in a direction "b".

Although the second transmitter 230 and the receiver 310 using the USB send information in both directions, the A/V cable 240 and the A/V receiver 320 may send information only in one direction.

Conventionally, the rear camera and the navigation device are connected by wire without using the USB and the sensor is included in the navigation device. In this case, when an image signal is received from the A/V cable, the sensor recognizes the image signal and the display device of the navigation device displays the image signal. In contrast, in the present embodiment, information related to the image signal may be received via a USB cable without using the sensor.

The image signal in the reverse mode may be sent from the A/V cable 240 to the A/V receiver 320. For example, as shown in FIG. 5(c), when data captured in the reverse mode is displayed, the controller 220 sends all the received data to the navigation device via the A/V cable 240 without determining whether an event occurs and the navigation device 300 displays the image signal received via the USB, that is, the rear image of the vehicle captured in the reverse mode of the vehicle.

In the vehicle rear sensor and method for sensing the rear image according to the embodiment, the image signal captured by the rear camera may be wirelessly sent to the USB dongle and the USB dongle may be connected to the navigation device such that the navigation device displays the rear image of the vehicle.

In particular, even in the drive mode or the stop mode, a person or object approaching the rear side of the vehicle is determined as an event such that the driver recognizes the event. The image corresponding to the event may be stored in the navigation device. Without using an expensive 2-channel black box, the rear camera may send an image corresponding to an event and the navigation device may store the image.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A vehicle rear sensor comprising:
an imaging device (100) including an image acquisition unit (120), an encoder configured to encode image information captured by the image acquisition unit (120) and a first transmitter (140) configured to transmit an encoded signal of the image information; and
a wireless reception device (200) including a receiver (210) configured to wirelessly receive the encoded signal, a controller (220) configured to determine whether the received encoded signal is an event signal and a second transmitter (230) configured to send the event signal and the received signal to a display device (300),
**characterized in that**:
the controller (200) compares image information of consecutive frames and displays the event signal when change in image information per unit time deviates from a predetermined range, and the event signal has at least one byte for identifying a mode.

2. The vehicle rear sensor according to claim 1, wherein the second transmitter (230) is a universal serial bus (USB).

3. The vehicle rear sensor according to claim 1 or 2, further comprising an audio/video (A/V) cable (240) connected to the display device (300).

4. The vehicle rear sensor according to claim 3, wherein the signal is an image signal captured by the image acquisition unit (120) and the A/V cable (240) continuously sends the image information to the display device (300) when power is applied to taillights of a vehicle.

5. The vehicle rear sensor according to any one of claim 1 to 4, wherein the second transmitter (230) sends power from the display device (300) to the wireless reception device (200).

6. The vehicle rear sensor according to any one of claim 1 to 5, wherein the imaging device (100) is provided at a rear side of a vehicle.

7. The vehicle rear sensor according to any one of claim 1 to 6, wherein the image acquisition unit (120) is a vehicle rear camera.

8. The vehicle rear sensor according to any one of claim 1 to 7, further comprising taillights disposed on a rear side of the vehicle, and wherein, when power is applied to the taillights of the vehicle, the image information of the imaging device (100) is continuously sent to the display device (300).

9. The vehicle rear sensor according to any one of claim 1 to 8, wherein the wireless reception device (200) is a universal serial bus (USB) dongle.

10. A method of sensing a rear side of a vehicle, the method comprising:
continuously acquiring (110, 150; 210, 250) image information of a rear side of a vehicle;
encoding (110, 150; 210, 250) the image information;
wirelessly transmitting (120, 160;230, 260) an encoded signal of the image information;
wirelessly receiving (120, 160;230, 260) the image information and determining whether the vehicle is in a drive mode or a stop mode; **characterized by**
comparing image information of consecutive frames and determining (130, 220) whether an event occurs, when the vehicle is in the drive mode or the stop mode; and
sending (140, 240) the image information to a display device (300) along with an event occurrence signal when the event occurs.

11. The method according to claim 10, further comprising storing (140, 240) the sent image information in the display device (300) and outputting the event occurrence signal on the display device (300) as image information and/or sound information.

12. The method according to claim 10 or 11, wherein, when the vehicle is in a reverse mode, the image information of the consecutive frames is continuously displayed (170, 270) on the display device (300).

13. The method according to any one of claim 10 to 12, wherein whether the vehicle is in the drive mode or the stop mode is determined in a vehicle rear camera or a wireless reception device (200).

14. The method according to any one of claim 10 to 13, wherein whether an event signal is generated or not is determined by determining whether pixel change deviates from a predetermined range.

## Patentansprüche

1. Fahrzeugrückseitensensor, der Folgendes umfasst:
eine Bildgebungsvorrichtung (100), die eine Bilderfassungseinheit (120), einen Codierer, der konfiguriert ist, Bildinformationen, die durch die Bilderfassungseinheit (120) erfasst werden, zu codieren, und einen ersten Sender (140), der konfiguriert ist, ein codiertes Signal der Bildinformationen zu senden, enthält; und
eine drahtlose Empfangsvorrichtung (200), die einen Empfänger (210), der konfiguriert ist, das codierte Signal drahtlos zu empfangen, eine Steuereinheit (220), die konfiguriert ist, zu bestimmen, ob das empfangende codierte Signal ein Ereignissignal ist, und einen zweiten Sender (230), der konfiguriert ist, das Ereignissignal und das empfangene Signal zu einer Anzeigevorrichtung (300) zu schicken, enthält,
**dadurch gekennzeichnet, dass**:
die Steuereinheit (200) Bildinformationen aufeinanderfolgender Rahmen vergleicht und das Ereignissignal anzeigt, wenn eine Änderung der Bildinformationen pro Zeiteinheit von einem vorgegebenen Bereich abweicht und das Ereignissignal wenigstens ein Byte für die Identifizierung einer Betriebsart besitzt.

2. Fahrzeugrückseitensensor nach Anspruch 1, wobei der zweite Sender (230) ein universeller serieller Bus (USB) ist.

3. Fahrzeugrückseitensensor nach Anspruch 1 oder 2, der ferner ein Audio/ Video-Kabel (A/V-Kabel) (240) umfasst, das mit der Anzeigevorrichtung (300) verbunden ist.

4. Fahrzeugrückseitensensor nach Anspruch 3, wobei das Signal ein Bildsignal ist, dass durch die Bilderfassungseinheit (120) erfasst wird, und das A/V-Kabel (240) die Bildinformationen ununterbrochen zu der Anzeigevorrichtung (300) schickt, wenn in Rückfahrscheinwerfer eines Fahrzeugs Leistung eingegeben wird.

5. Fahrzeugrückseitensensor nach einem der Ansprüche 1 bis 4, wobei der zweite Sender (230) Leistung von der Anzeigevorrichtung (300) zu der drahtlosen Empfangsvorrichtungen (200) schickt.

6. Fahrzeugrückseitensensor nach einem der Ansprüche 1 bis 5, wobei die Bildgebungsvorrichtung (100) an einer Rückseite eines Fahrzeugs vorgesehen ist.

7. Fahrzeugrückseitensensor nach einem der Ansprüche 1 bis 6, wobei die Bilderfassungseinheit (120) eine Fahrzeugrückfahrkamera ist.

8. Fahrzeugrückseitensensor nach einem der Ansprüche 1 bis 7, der ferner Rückfahrscheinwerfer umfasst, die an einer Rückseite des Fahrzeugs angeordnet sind, wobei dann, wenn in die Rückfahrscheinwerfer des Fahrzeugs Leistung eingegeben wird, die Bildinformationen der Bildgebungsvorrichtung (100) ununterbrochen zu der Anzeigevorrichtung (300) geschickt werden.

9. Fahrzeugrückseitensensor nach einem der Ansprüche 1 bis 8, wobei die drahtlose Empfangsvorrichtung (200) ein Dongle eines universellen seriellen Busses (USB-Dongle) ist.

10. Verfahren zum Erfassen einer Rückseite eines Fahrzeugs, wobei das Verfahren Folgendes umfasst:
ununterbrochenes Erfassen (110, 150; 210, 250) von Bildinformationen einer Rückseite eines Fahrzeugs;
Codieren (110, 150; 210, 250) der Bildinformationen;
drahtloses Senden (120, 160; 230, 260) eines codierten Signals der Bildinformationen;
drahtloses Empfangen (120, 160; 230, 260) der Bildinformationen und Bestimmen, ob das Fahrzeug in einer Fahrbetriebsart oder einer Stoppbetriebsart ist; **gekennzeichnet durch**
Vergleichen von Bildinformationen aufeinanderfolgender Rahmen und Bestimmen (130, 220), ob ein Ereignis auftritt, wenn das Fahrzeug in der Fahrbetriebsart oder in der Stoppbetriebsart ist; und
Schicken (140, 240) der Bildinformationen zusammen mit einem Ereignisauftrittssignal, wenn das Ereignis auftritt, zu einer Anzeigevorrichtung (300).

11. Verfahren nach Anspruch 10, das ferner das Speichern (140, 240) der geschickten Bildinformationen in der Anzeigevorrichtung (300) und das Ausgeben des Ereignisauftrittssignals an die Anzeigevorrichtung (300) als Bildinformationen und/oder Toninformationen umfasst.

12. Verfahren nach Anspruch 10 oder 11, wobei dann, wenn das Fahrzeug in einer Rückwärtsfahrbetriebsart ist, die Bildinformationen der aufeinanderfolgenden Rahmen auf der Anzeigevorrichtung (300) ununterbrochen angezeigt werden.

13. Verfahren nach einem der Ansprüche 10 bis 12, wobei die Tatsache, ob das Fahrzeug in der Fahrbetriebsart oder in der Stoppbetriebsart ist, in einer Fahrzeugrückfahrkamera oder einer drahtlosen Empfangsvorrichtung (200) bestimmt wird.

14. Verfahren einem der Ansprüche 10 bis 13, wobei die Tatsache, ob ein Ereignissignal erzeugt wird oder nicht, durch Bestimmen, ob eine Pixeländerung von einem vorgegebenen Bereich abweicht, bestimmt wird.

## Revendications

1. Capteur arrière de véhicule comprenant :
un dispositif preneur d'images (100) comprenant une unité d'acquisition d'images (120), un codeur configuré pour coder les informations d'images prises par l'unité d'acquisition d'images (120) et un premier émetteur (140) configuré pour transmettre un signal codé des informations d'images ; et
un dispositif de réception sans fil (200) comprenant un récepteur (210) configuré pour recevoir, par communication sans fil, le signal codé, un dispositif de commande (220) configuré pour déterminer si le signal codé reçu est un signal d'événement ou non et un second émetteur (230) configuré pour envoyer le signal d'événement et le signal reçu à un écran d'affichage (300),
**caractérisé en ce que** :
le dispositif de commande (200) compare les informations d'images de trames consécutives et affiche le signal d'événement lorsqu'un changement dans les informations d'image par unité de temps s'écarte d'une gamme prédéterminée, et le signal d'événement dispose d'au moins un octet pour identifier un mode.

2. Capteur arrière de véhicule selon la revendication 1, dans lequel le second émetteur (230) est un port série universel (USB).

3. Capteur arrière de véhicule selon la revendication 1 ou 2, comprenant en outre un câble audio/vidéo (A/V) (240) connecté à l'écran d'affichage (300) .

4. Capteur arrière de véhicule selon la revendication 3, dans lequel le signal est un signal d'images prises par l'unité d'acquisition d'images (120) et le câble A/V (240) envoie en continu les informations d'images à l'écran d'affichage (300) lorsque le courant électrique passe dans les feux arrière d'un véhicule.

5. Capteur arrière de véhicule selon l'une quelconque des revendications 1 à 4, dans lequel le second émetteur (230) envoie une alimentation électrique entre l'écran d'affichage (300) et le dispositif de réception sans fil (200).

6. Capteur arrière de véhicule selon l'une quelconque des revendications 1 à 5, dans lequel le dispositif preneur d'images (100) est monté à l'arrière d'un véhicule.

7. Capteur arrière de véhicule selon l'une quelconque des revendications 1 à 6, dans lequel l'unité d'acquisition d'images (120) est une caméra arrière pour véhicule.

8. Capteur arrière de véhicule selon l'une quelconque des revendications 1 à 7, comprenant des feux arrière disposés à l'arrière du véhicule, et dans lequel, lorsque le courant électrique passe dans les feux arrière du véhicule, les informations d'images du dispositif preneur d'images (100) sont envoyées en continu à l'écran d'affichage (300).

9. Capteur arrière de véhicule selon l'une quelconque des revendications 1 à 8, dans lequel le dispositif de réception sans fil (200) est une clé électronique pour port série universel (USB).

10. Procédé de détection de l'arrière d'un véhicule, ledit procédé comprenant :
l'acquisition en continu (110, 150 ; 210, 250) d'informations d'images de l'arrière d'un véhicule ;
le codage (110, 150 ; 210, 250) des informations d'images ;
la transmission sans fil (120, 160 ; 230, 260) d'un signal codé des informations d'images ;
la réception sans fil (120, 160 ; 230, 260) des informations d'images et la détermination du fait que le véhicule est en mode conduite ou en mode arrêt ; **caractérisé par**
la comparaison des informations d'images de trames consécutives et la détermination (130, 220) du fait qu'un événement se produit ou non, lorsque le véhicule est en mode conduite ou en mode arrêt ; et
l'envoi (140, 240) des informations d'images à un écran d'affichage (300) en même temps qu'un signal d'occurrence d'événement lorsque l'événement se produit.

11. Procédé selon la revendication 10, comprenant en outre la mise en mémoire (140, 240) des informations d'images envoyées dans l'écran d'affichage (300) et l'envoi du signal d'occurrence d'événement sur l'écran d'affichage (300) sous la forme d'informations d'images et/ou d'informations sonores.

12. Procédé selon l'une quelconque des revendications 10 ou 11, dans lequel, lorsque le véhicule est en marche arrière, les informations d'images des trames consécutives sont affichées en continu (170, 270) sur l'écran d'affichage (300).

13. Procédé selon l'une quelconque des revendications 10 à 12, dans lequel, le fait que le véhicule est en mode conduite ou en mode arrêt est déterminé par une caméra arrière de véhicule ou un dispositif de réception sans fil (200).

14. Procédé selon l'une quelconque des revendications 10 à 13, dans lequel le fait qu'un signal d'événement est généré ou non est déterminé en déterminant si le changement de pixel s'écarte ou non d'une gamme prédéterminée.
